(19) **Europäisches Patentamt / European Patent Office / Office européen des brevets**

(11) **EP 3 018 487 B1**

(12) **FASCICULE DE BREVET EUROPEEN**

(45) Date de publication et mention
de la délivrance du brevet:
**31.01.2018 Bulletin 2018/05**

(51) Int Cl.:
***G01R 31/40*** *(2014.01)*

(21) Numéro de dépôt: **15192260.6**

(22) Date de dépôt: **30.10.2015**

(54) **PROCÉDÉ ET SYSTÈME D'INSPECTION D'UNE CENTRALE SOLAIRE PHOTOVOLTAÏQUE**

ÜBERPRÜFUNGSVERFAHREN UND -SYSTEM EINER FOTOVOLTAIK-SOLARANLAGE

METHOD AND SYSTEM FOR INSPECTING A PHOTOVOLTAIC SOLAR POWER PLANT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **04.11.2014 FR 1460606**

(43) Date de publication de la demande:
**11.05.2016 Bulletin 2016/19**

(73) Titulaire: **COMMISSARIAT À L'ÉNERGIE
ATOMIQUE ET AUX
ÉNERGIES ALTERNATIVES
75015 Paris (FR)**

(72) Inventeur: **HA, Duy Long
73000 CHAMBERY LE VIEUX (FR)**

(74) Mandataire: **Novaimo
ActiTech 8
60 avenue Marie Curie
Archamps Technopole
74166 Saint Julien-en-Genevois Cedex (FR)**

(56) Documents cités:
**US-A1- 2011 036 344     US-A1- 2012 268 149
US-A1- 2013 121 370**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de contrôle de la qualité de modules solaires d'une centrale solaire photovoltaïque visant à détecter d'éventuels défauts.

Une centrale solaire photovoltaïque est un ensemble comportant une pluralité de modules solaires photovoltaïque (PV) reliés entre eux, destiné à produire de l'électricité. Elle s'étend sur une grande superficie, pouvant atteindre plusieurs km$^2$. Les documents US2012/0268149A et US2011/0036344A décrivent des procédés de contrôle des modules solaires. Les modules, constitués de cellules photovoltaïques, sont susceptibles de présenter des défauts qui ont potentiellement un impact sur la productivité de la centrale. Il est donc important de pouvoir détecter et localiser ces défauts, de manière à intervenir au niveau du module défectueux pour le réparer. Généralement, un opérateur de maintenance équipé d'une caméra thermique passe successivement devant les différents modules PV pour réaliser des prises de vue thermique. Les données thermiques ainsi collectées sont analysées afin d'y détecter une zone défectueuse potentielle. En variante, l'opérateur peut débrancher chaque module à contrôler et déterminer la caractéristique courant-tension, ou I(V), du module à l'aide d'une traceur IV. Si une ou plusieurs zones défectueuses potentielles sont détectées, une intervention de réparation est déclenchée. Celle-ci nécessite généralement un arrêt de fonctionnement temporaire de la centrale PV, ce qui représente une perte de production non négligeable.

Compte tenu de la superficie d'une centrale PV, une telle opération de maintenance s'avère très coûteuse en temps et en perte de production. En outre, elle manque très souvent de fiabilité. En effet, les zones défectueuses potentielles détectées peuvent s'avérer ne pas être défectueuses en réalité. Il en résulte que la perte de production causée par une intervention de réparation peut a posteriori s'avérer injustifiées. Cela peut dissuader l'exploitant d'une centrale PV de réaliser une telle opération de maintenance.

La présente invention vient améliorer la situation.

A cet effet, l'invention concerne un procédé d'inspection d'une centrale solaire photovoltaïque comportant une pluralité de modules solaires, caractérisé en ce qu'il comprend une étape de détermination d'une fenêtre temporelle d'inspection durant laquelle une puissance prévisionnelle d'éclairement solaire destinée à être reçue par un module photovoltaïque est supérieure ou égale à un seuil prédéfini, et durant la fenêtre temporelle d'inspection déterminée, pour chaque module d'un ensemble de modules solaires comportant au moins une partie de la pluralité de modules solaires de la centrale :

- une étape de détermination d'une température valide de fonctionnement de module photovoltaïque;
- une étape de collecte de données thermiques relatives au module photovoltaïque et
- une étape d'analyse des données thermiques collectées pour détecter une éventuelle zone défectueuse du module photovoltaïque, dont la température est telle que l'écart entre la température de ladite zone défectueuse et la température valide du module photovoltaïque est supérieure à un seuil prédéfini, la température de ladite zone étant plus élevée que la température valide.

L'invention consiste à définir, de façon judicieuse, une fenêtre temporelle d'inspection de la centrale photovoltaïque en cours de fonctionnement et, durant cette fenêtre d'inspection, à déterminer la température valide du module, c'est-à-dire sa température normale de fonctionnement. La fenêtre temporelle d'inspection est choisie de telle sorte que la température valide, ou normale, de fonctionnement du module déterminée durant cette fenêtre constitue une température de référence qui est pertinente pour discriminer de façon fiable les points chauds d'un module, correspondant à une zone défectueuse, et les zones sans défauts. Grâce à cela, la détection de défauts, ou de zones défectueux, est très fiable de sorte qu'une intervention de réparation de la centrale, avec arrêt momentané de celle-ci, peut être déclenchée de façon justifiée.

Le procédé peut comprendre tout ou partie des caractéristiques additionnelles suivantes :

- l'étape de détermination d'une température valide de fonctionnement du module photovoltaïque comprend une sous-étape de mesure d'une température ambiante, une sous-étape de détermination d'une puissance d'éclairement solaire reçue par le module et une sous-étape de calcul de la température valide de fonctionnement du module à partir de la température ambiante et de la puissance d'éclairement solaire déterminée ;
- la puissance d'éclairement solaire reçue par le module photovoltaïque est déterminée à partir d'une mesure de la puissance d'éclairement solaire reçue par une cellule photovoltaïque de référence du module ;
- on détermine une fenêtre temporelle d'inspection à partir d'un créneau horaire journalier prédéfini et de données de prévisions météorologiques ;
- suite à la détection d'une zone défectueuse dans un module, il est prévu une étape de marquage physique dudit module ;
- les données thermiques étant collectées par un dispositif de prise de vue thermique, il est prévu une étape de contrôle de la qualité des données thermiques collectées consistant à vérifier des conditions de prise de vue et la qualité de la prise de vue ;

- il comprend une étape de déplacement le long d'un trajet d'inspection au sein de la centrale photovoltaïque par un dispositif de collecte de données thermiques et en ce que l'étape de détermination d'une température valide de fonctionnement de module est exécutée à une succession de points de contrôle le long du trajet, ladite température valide déterminée à un point de contrôle étant valable pour une pluralité de modules ;
- il comprend une étape de détermination d'un nombre de dispositifs de collecte de données thermiques destinés à inspecter la centrale photovoltaïque et, pour chaque dispositif de collecte, d'un trajet d'inspection à parcourir, à partir d'un plan de la centrale photovoltaïque et de la fenêtre d'inspection déterminée et de manière à satisfaire au moins l'une des contraintes du groupe comportant la durée de la fenêtre d'inspection, la vitesse de déplacement d'un dispositif de collecte et la capacité de mesure d'un dispositif de collecte.

L'invention concerne aussi un système d'inspection d'une centrale solaire photovoltaïque comportant une pluralité de modules solaires, caractérisé en ce qu'il comprend un dispositif de supervision comportant un module de détermination d'une fenêtre temporelle d'inspection durant laquelle une puissance prévisionnelle d'éclairement solaire destinée à être reçue par un module photovoltaïque est supérieure ou égale à un seuil prédéfini, et au moins un dispositif de collecte destiné à parcourir un trajet d'inspection de modules solaires durant la fenêtre temporelle d'inspection déterminée, et comportant:

- un module de détermination d'une température valide de fonctionnement de module photovoltaïque ;
- un module de collecte de données thermiques, destiné à collecter des données thermiques relatives à un module photovoltaïque et
- un module d'analyse de données thermiques collectées pour détecter une éventuelle zone défectueuse du module photovoltaïque, dont la température est telle que l'écart entre la température de ladite zone défectueuse et la température valide du module photovoltaïque est supérieure à un seuil prédéfini, la température de ladite zone étant plus élevée que la température valide.

Avantageusement, le système comprend tout ou partie des caractéristiques additionnelles suivantes :

- le module de détermination d'une fenêtre temporelle d'inspection est agencé pour déterminer ladite fenêtre temporelle d'inspection à partir d'un créneau horaire journalier prédéfini et de données de prévisions météorologiques ;
- le dispositif de collecte comprend un module de marquage physique d'un module comportant une zone défectueuse ;
- le dispositif de collecte comporte un module de marquage destiné à associer des données de localisation et/ou d'identification d'un module contenant une zone défectueuse à des données relatives à ladite zone défectueuse ;
- le dispositif de collecte comprend un module de contrôle de la qualité des données thermiques collectées adapté pour vérifier des conditions de prise de vue et la qualité des prises de vue ;
- le dispositif de supervision comporte un module de détermination d'un nombre de dispositifs de collecte de données thermiques destinés à inspecter la centrale photovoltaïque et, pour chaque dispositif de collecte, d'un trajet d'inspection à parcourir, à partir d'un plan de la centrale photovoltaïque et de la fenêtre d'inspection déterminée et de manière à satisfaire au moins l'une des contraintes du groupe comportant la durée de la fenêtre d'inspection, la vitesse de déplacement d'un dispositif de collecte et la capacité de mesure d'un dispositif de collecte ;
- le dispositif de supervision comporte un module de détermination d'un nombre de dispositifs de collecte de données thermiques destinés à inspecter la centrale photovoltaïque et, pour chaque dispositif de collecte, d'un trajet d'inspection à parcourir, à partir d'un plan de la centrale photovoltaïque et de la fenêtre d'inspection déterminée et de manière à satisfaire au moins l'une des contraintes du groupe comportant la durée de la fenêtre d'inspection, la vitesse de déplacement d'un dispositif de collecte et la capacité de mesure d'un dispositif de collecte.

L'invention sera mieux comprise à l'aide de la description suivante d'un mode de réalisation particulier d'un procédé d'inspection de modules solaires d'une centrale solaire photovoltaïque, selon un mode de réalisation particulier de l'invention, en référence aux dessins annexés sur lesquels :

- La figure 1 représente de façon simplifiée un parcours d'un dispositif de collecte dans une centrale solaire photovoltaïque, selon un premier exemple de réalisation ;
- La figure 2 représente de façon simplifiée différents parcours réalisés par différents dispositifs de collecte dans une centrale solaire photovoltaïque, selon un deuxième exemple de réalisation ;

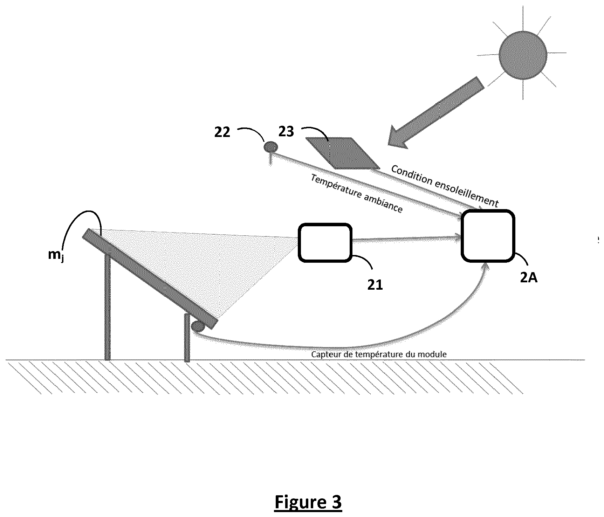

- La figure 3 représente de façon schématique le dispositif de collecte de la figure 1 en cours d'inspection d'un module photovoltaïque ;
- Les figures 4A et 4B représentent un organigramme des étapes du procédé d'inspection d'une centrale solaire photovoltaïque, selon un mode de réalisation particulier de l'invention ;

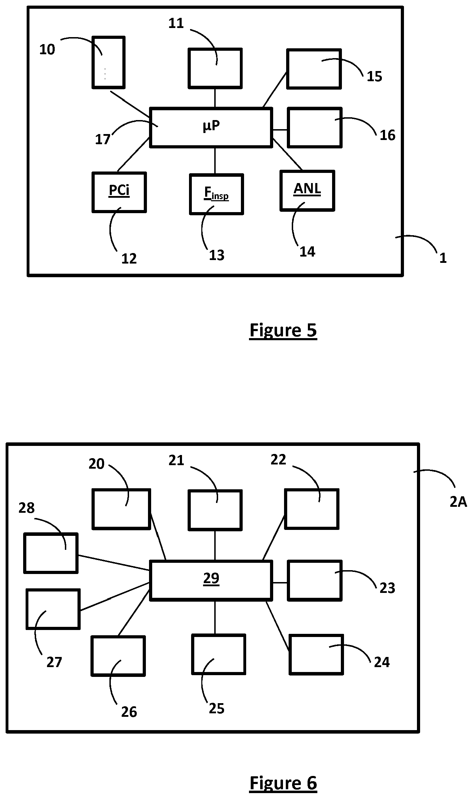

- La figure 5 représente un schéma bloc fonctionnel d'un dispositif maître de supervision d'un système de supervision, selon une forme de réalisation particulière ;
- La figure 6 représente un schéma bloc fonctionnel d'un dispositif esclave de collecte d'un système de supervision, selon une forme de réalisation particulière.

Le procédé de l'invention permet de réaliser une inspection d'une centrale photovoltaïque 100 comportant une pluralité de modules solaires photovoltaïques aux fins d'y détecter une ou plusieurs éventuelle(s) zone(s) défectueuse(s), ou défaut(s), la centrale étant en cours de fonctionnement durant l'inspection. La centrale PV est installée sur un site donné. Les modules solaires PV sont par exemple disposés en rangées parallèles. On note « X » le nombre total de modules solaires PV d'une centrale PV, « j » l'indice d'un module, j étant compris entre 1 et X, et $m_j$ représente le module d'indice j.

D'emblée, notons que les éléments identiques ou correspondants représentés sur les différentes figures portent les mêmes références, sauf indication contraire.

Dans l'exemple de réalisation décrit ici, le procédé est mis en oeuvre par un système d'inspection qui comporte un dispositif maître de supervision 1 et un ou plusieurs dispositifs esclaves 2A, 2B,..., de collecte de données relatives aux modules PV.

Le dispositif maître de supervision 1 dispose d'un plan du site de la centrale photovoltaïque 100 stocké dans une base de donnée, ou mémoire, 10. Il s'agit par exemple d'un ordinateur portable destiné à être utilisé par un opérateur de maintenance et comportant une interface homme-machine (clavier, écran, ..) non représentée. Le dispositif 1 intègre les modules ou éléments suivants :

- un module 11 de détermination du nombre de dispositifs de collecte nécessaires pour inspecter une centrale PV et, pour chaque dispositif de collecte, d'un trajet d'inspection d'au moins une partie de la centrale PV;
- un module 12 de génération de points de contrôle PCi ;
- un module 13 de détermination d'une fenêtre temporelle d'inspection de la centrale photovoltaïque ;
- un module 14 d'analyse de données collectées par un dispositif esclave, intégrant un outil de traitement d'image et du signal ;
- un module 15 de communication, par voie radio ou filaire, avec un réseau de communication tel que l'Internet et
- un module 16 de communication par voie radio avec des dispositifs esclaves de collecte ;
- une unité centrale de commande 17, en l'espèce un micro-processeur, à laquelle tous les éléments du dispositif 1 sont connectés et destinée à contrôler le fonctionnement de ces éléments.

Un trajet d'inspection d'un dispositif de collecte est un itinéraire sur le site de la centrale PV, le long des modules PV, destiné à être parcouru par le dispositif de collecte lors d'une opération d'inspection de la centrale PV.

Par définition, un point de contrôle, noté PCi, représente ici une position le long d'un trajet d'inspection au niveau de laquelle le dispositif de collecte est destiné notamment à collecter des données relatives à un module PV, telle que des données thermiques. Les points de contrôle successifs peuvent être séparés les uns des autres le long du trajet d'inspection par une distance donnée ou par une durée de déplacement donnée.

Chaque dispositif de collecte 2A (2B, 2C, ...) comporte les modules ou éléments suivants :

- un module 20 de détermination d'une température valide, ou normale, de fonctionnement de module PV ;
- un module 21 de collecte de données relatives à un module PV, par exemple une caméra thermique, comportant ici des capteurs aptes à effectuer des prises de vue thermique ;
- un capteur de température 22, destiné à mesurer une température ambiante ;
- un capteur d'irradiance 23, destiné à mesurer la puissance d'éclairement solaire frappant par exemple une cellule PV de référence d'un module PV ;
- un module d'analyse 24, destiné à effectuer une analyse de données collectées aux fins d'y détecter un ou plusieurs défauts ;
- un module 25 d'assistance de navigation et de prise de vue, destiné à contrôler le déplacement du dispositif de collecte 2A et à contrôler la qualité des données collectées, notamment les conditions de prise de vue et la qualité des prises de vue ;
- un module de marquage 26 ;
- un module 27 de communication avec le dispositif maître 1 ;
- une base de données, ou mémoire, locale 28 ;
- une unité centrale de commande 29, en l'espèce un micro-processeur, à laquelle tous les éléments du dispositif 1 sont connectés et destinée à contrôler le fonctionnement de ces éléments ;
- une interface homme-machine non représentée.

Chaque dispositif de collecte 2A (2B, 2C, ...) peut être porté par un véhicule de transport, tel qu'un drone. Le véhicule de transport peut être télécommandé et/ou programmé par le dispositif de supervision 1. On pourrait toutefois envisager que le dispositif de collecte soit porté par un opérateur ou utilisateur.

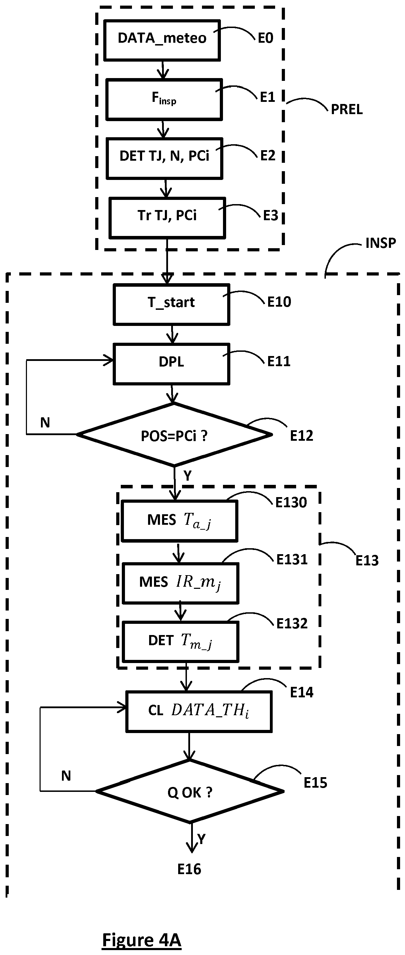

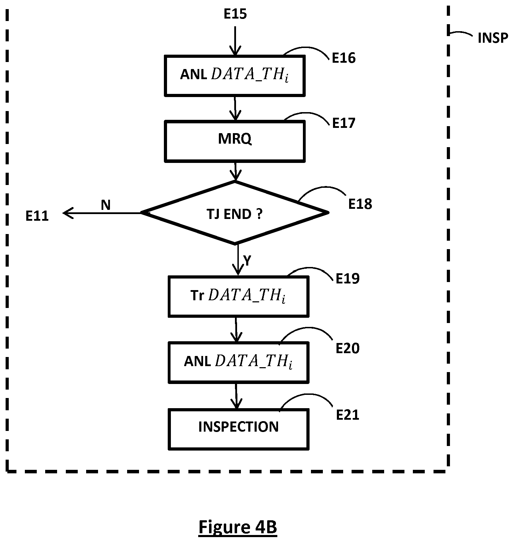

On va maintenant décrire en référence à la figure 4 le procédé d'inspection d'une centrale solaire photovoltaïque 100, selon un mode de réalisation particulier de l'invention, en référence aux figures 4A et 4B.

Le procédé comprend une phase préliminaire PREL de détermination d'une fenêtre temporelle d'inspection $F_{insp}$ et de détermination d'un ou plusieurs trajet(s) d'inspection destiné(s) à être parcouru(s) par un ou plusieurs dispositif(s) esclave(s) de collecte durant cette fenêtre d'inspection $F_{insp}$. Cette phase préliminaire PREL est mise en oeuvre par le dispositif maître 1. Elle est réalisée de façon anticipée, avant l'inspection sur site de la centrale PV 100 en cours de fonctionnement. Elle vise à planifier l'inspection, notamment à prévoir une fenêtre temporelle $F_{insp}$ pertinente pour l'inspection, le nombre de dispositifs de collecte nécessaires pour inspecter la centrale PV 100 durant cette fenêtre temporelle $F_{insp}$ et le ou les trajets destinés à être parcourus par le ou les dispositifs de collecte durant l'inspection. La phase préliminaire PREL comprend quatre étapes E0 à E3 décrites ci-après.

La première étape E0 est une étape de collecte de données DATA_meteo de prévision météorologique durant les jours à venir. Ces données peuvent être obtenues sur un site d'informations météorologiques du réseau Internet auquel le dispositif de supervision 1 est connecté.

Puis, lors de l'étape E1, le dispositif maître 1 détermine une fenêtre temporelle d'inspection $F_{insp}$, durant laquelle la puissance prévisionnelle d'éclairement solaire, ou irradiance prévisionnelle, qui est prévue d'être reçue par un module photovoltaïque de la centrale PV est supérieure ou égale à un seuil prédéfini de radiance $S_{rad}$. Par exemple, le seuil de radiance $S_{rad}$ est égal à 800W.m$^{-2}$. La fenêtre $F_{insp}$ est déterminée ici à partir d'un créneau horaire journalier préétabli $\Delta T$, par exemple 12h-14h, stocké en mémoire, et des données de prévision météorologique obtenues DATA_meteo. Le créneau horaire $\Delta T$ correspond à une plage horaire durant laquelle l'irradiance a le plus de probabilité d'être supérieure au seuil $S_{rad}$ durant une journée quelconque. La fenêtre $F_{insp}$ est définie par des données temporelles comportant ici une date DATE, une heure de début T_start et une heure de fin T_end. L'heure de début est égale ou postérieure à 12h, tandis que l'heure de fin T_end est égale ou antérieure à 14h.

En variante, pour déterminer la fenêtre temporelle d'inspection $F_{insp}$, on peut également tenir compte de données de prévision de la production de la centrale PV.

La trajectoire de navigation peut être optimisée de manière à maximiser l'espace parcouru (ou distance parcourue) tout en respectant le temps limité. A cet effet, on peut utiliser un algorithme d'optimisation connu tel que l'algorithme permettant de calculer le plus court chemin. Une optimisation multi-variable est réalisée si le nombre de dispositifs esclaves est supérieur à un.

Le procédé se poursuit par l'étape E2 de détermination du nombre de dispositif(s) esclaves nécessaires et, pour chaque dispositif esclave 2A (2B, 2C, ...), d'un trajet à parcourir 3A (3B, 3C, ...). Cette étape E2 est réalisée à partir de données de cartographie relatives au plan du site de la centrale PV 100, stockée en mémoire dans le dispositif maître 1, et de la fenêtre temporelle d'inspection prévue $F_{insp}$. Elle consiste ici à résoudre un problème d'optimisation défini par des contraintes à satisfaire et un objectif à atteindre :

- contraintes :

    i. contrainte temporelle de durée entre T_start et T_end ;
    ii. contrainte de vitesse de déplacement de chaque dispositif esclave ;
    iii. capacité de mesure de chaque dispositif esclave ;

- objectif : parcourir toute la centrale PV (en variante, le plus rapidement possible)

Un dispositif esclave peut être équipé d'un ou plusieurs types de capteur (par exemple capteur de thermographie, capteur de photographie, capteur de photoluminescence). En fonction du ou des capteur(s) utilisé(s), les contraintes de mesure peuvent être différentes (notamment temps de pose, contrainte de stabilisation, etc..). Ces contraintes déterminent la capacité de mesure du dispositif esclave.

A partir des données de plan du site et de la fenêtre d'inspection prévue $F_{insp}$, des contraintes à satisfaire et de l'objectif à atteindre, le dispositif de supervision 1 détermine le nombre de dispositif(s) de collecte à utiliser et définit un trajet à parcourir pour chacun d'entre eux (étape E2). En outre, lors de l'étape E2, le dispositif maître 1 définit ici une succession de points de contrôle PCi (avec i égal à 1, 2, ..., N) le long du trajet de chaque dispositif esclave. Les points de contrôle successifs PCi sont adaptés pour que les prises de vue thermique successivement réalisées au niveau de ces points de contrôle PCi couvrent la totalité des modules situés le long du parcours.

Lors de l'étape E3, le trajet à parcourir 3A (3B, 3C, ...), avec l'indication des points de contrôle PCi le long du parcours, est transmis à chaque dispositif de collecte concerné.

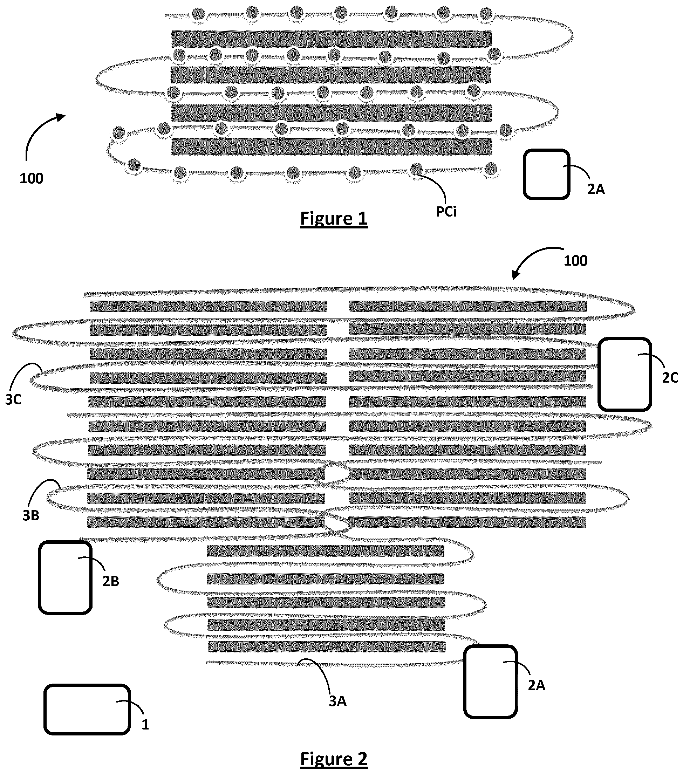

Sur les figures 1 et 2, on a représenté des trajets d'inspection d'une centrale PV par des dispositifs de collecte selon deux exemples de réalisation. Sur la figure 1, on a représenté le trajet 3A d'un dispositif de collecte 2A permettant d'inspecter entièrement une centrale PV 100 durant la fenêtre d'inspection F$_{insp}$. Sur la figure 2, on a représenté les trajets 3A-3C de trois dispositifs de collecte 2A-2C permettant l'inspection d'une autre centrale PV 100, plus étendue, durant la fenêtre temporelle F$_{insp}$.

On va maintenant décrire la phase d'inspection INSP de la centrale PV, celle-ci étant en fonctionnement, par le système d'inspection. Prenons l'exemple de la figure 2 d'une centrale PV destinée à être inspectée par trois dispositifs de collecte 2A, 2B, 2B supervisés par un dispositif maître 1, à la date DATE et durant la fenêtre temporelle F$_{insp}$ comprise entre T_start et T_end.

Cette phase INSP est mise en oeuvre sur le site de la centrale PV, pendant que la centrale PV fonctionne. Elle démarre à l'instant T_start de début de la fenêtre temporelle d'inspection, à la date DATE déterminée, lors d'une étape E10.

Lors d'une étape E11, chaque dispositif esclave 2A (2B, 2C) se déplace le long de son trajet 3A (3B, 3C).

Parallèlement, au cours du déplacement le long du trajet 3A (3B, 3C), le dispositif esclave 2A (2B, 2C) vérifie si sa position courante correspond à un point de contrôle PCi, lors d'une étape de test E12.

Les étapes E11 et E12 sont mises en oeuvre par le module d'assistance 25.

Si le test E12 est négatif (branche N sur la figure 4A), le procédé revient à l'étape E11 et poursuit son déplacement.

Si le test E12 est positif (branche Y sur la figure 4A), autrement dit si le dispositif esclave 2A (2B, 2C) se trouve en un point de contrôle PCi, le procédé passe à une étape E13 de détermination de la température $T_{m\_j}$ d'un module photovoltaïque, noté « m$_j$ » et d'indice j, situé à proximité, ou au niveau, du point de contrôle PCi. La température déterminée $T_{m\_j}$ correspond à une température valide de fonctionnement du module d'indice j, c'est-à-dire à la température normale du module lorsqu'il fonctionne correctement. Elle est déterminée par la relation simplifiée suivante :

$$T_{m\_j} = T_{a\_j} - 25 + \left(\frac{G_T}{G_{NOCT}}\right) * (T_{NOCT} - 20).$$

où :

- $T_{a\_j}$, exprimée en °C, représente la température ambiante autour du module m$_j$ ;
- $G_T$, exprimée en W/m$^2$, représente la radiance globale reçue par le module m$_j$ ;
- $T_{NOCT}$, exprimée en °C, représente la température de fonctionnement du module dans des conditions standards et est par exemple fixée à 47°C ;
- $G_{NOCT}$, exprimée en W/m$^2$, représente la radiance reçue par le module m$_j$ dans des conditions standards.

La température valide de fonctionnement du module d'indice j pourrait être déterminée différemment, notamment par une relation différente (plus complexe).

L'étape E13 comprend trois sous-étapes E130-E132 : une sous-étape E130 de mesure d'une température ambiante, une sous-étape E131 de mesure de l'irradiance solaire et une sous-étape E132 de calcul de la température valide, ou normale, $T_{m\_j}$ du module m$_j$.

La sous-étape E130 consiste à mesurer la température ambiante $T_{a\_j}$ autour du module m$_j$ à l'aide du capteur thermique 22 porté par le dispositif esclave 2A (2B, 2C). En variante, on pourrait mesurer une seule fois, ou un nombre limité de fois, la température ambiante du site T$_a$, par exemple en début de trajet et éventuellement en milieu de trajet, qui serait utilisée pour calculer les températures des différents modules de la centrale PV parcourus par le dispositif esclave 2A (2B, 2C).

La sous-étape E131 consiste à mesurer l'irradiance solaire frappant une cellule de référence du module m$_j$ et à déterminer l'irradiance solaire IR_m$_j$ frappant le module m$_j$ en multipliant l'irradiance mesurée par le nombre de cellules PV du module m$_j$. Par définition, l'irradiance solaire est la puissance de l'éclairement solaire frappant par unité de surface. Elle s'exprime en W.m$^{-2}$. La cellule de référence peut être l'une quelconque des cellules photovoltaïques constituant le module m$_j$.

La sous-étape E132 consiste à calculer la température normale ou valide $T_{m\_j}$ du module m$_j$ à l'aide de la relation précédemment mentionnée et à partir de la température ambiante $T_{a\_j}$ mesurée.

En variante, la température normale ou valide $T_{m\_j}$ du module m$_j$ peut être mesurée directement par une sonde de température placée contre le module.

En variante, l'étape E13 n'est pas réalisée à chaque point de contrôle PCi, mais tous les y points de contrôle. Dans ce cas, la température déterminée à l'étape E13 est valable pour plusieurs modules PV voisins ou proches.

Le procédé passe ensuite à une étape E14 de collecte de données thermiques. Les données thermiques, notées DATA_TH$_i$, sont collectées au niveau du point de contrôle PC$_i$ considéré. La collecte est réalisée par les capteurs 21 de prise de vue thermique du dispositif esclave 2A (2B, 2C). Les prises de vue thermique sont réalisées par les capteurs 21 positionnés au-dessus des modules PV, de manière à prendre des vues des surfaces supérieures des modules PV, recevant l'éclairement solaire. Selon la zone couverte par la prise de vue, les données thermiques peuvent être relatives à tout ou partie du module $m_j$. Elles peuvent aussi inclure des données thermiques relatives à un module voisin, notamment $m_{j-1}$ et/ou $m_{j+1}$.

En variante, on pourrait envisager de compléter les prises de vue thermique par des prises de vue visuelle à l'aide d'un dispositif de type caméra, et/ou par la détermination de la caractéristique courant-tension du module $m_j$ à l'aide d'un traceur IV.

L'étape de collecte E14 est suivie d'une étape E15 de contrôle de la qualité des données thermiques collectées $DATA\_TH_i$, mise en oeuvre par le module d'assistance 25. Cette étape E15 vise à vérifier la qualité des données $DATA\_TH_i$ collectées afin de contrôler si ces données sont exploitables pour une détection et une localisation de défauts. Elle comprend une sous-étape E140 de vérification des conditions de prise de vue et une sous-étape E141 de contrôle de la qualité des prises de vue. La vérification des conditions de prise de vue consiste par exemple à vérifier si les lignes du module sont parallèles, ou quasi-parallèles, aux bords des images prises. Par « lignes du module », on entend désigner les axes d'alignement des cellules PV et les bords du module. Le contrôle de qualité consiste par exemple à vérifier si les images prises sont floues.

Si le contrôle de qualité est négatif (branche N sur la figure 4A), autrement dit si la qualité des données thermiques $DATA\_TH_i$ collectées est insuffisante, l'étape de collecte E14 est réitérée.

Si le contrôle de qualité est positif (branche Y sur la figure 4A), la qualité des données thermiques $DATA\_TH_i$ étant satisfaisante, le procédé se poursuit par une étape E16 d'analyse des données thermiques collectées et, le cas échéant, de détection de défauts ou zones défectueuses.

L'analyse des données $DATA\_TH_i$ permet de détecter une éventuelle zone défectueuse du module photovoltaïque, dont la température est telle que l'écart entre la température de cette zone défectueuse et la température valide du module photovoltaïque est supérieur à un seuil prédéfini, la température de ladite zone étant plus élevée que la température valide. Une telle zone défectueuse correspond généralement à une cellule photovoltaïque présentant un défaut ou à un problème sur le module (concernant par exemple une diode de bypass, une boite de jonction ou autre). Lors de l'étape E16, les données thermiques collectées sont ici analysées par un outil de traitement d'image et du signal permettant de déterminer le ou les « point(s) chaud(s) » intégré dans le module d'analyse 24 du dispositif esclave 2A (2B, 2C). L'analyse consiste à déterminer si le module $m_j$ ou la partie de module $m_j$ contient un ou plusieurs « point(s) chaud(s) », c'est-à-dire une zone dont la température est supérieure ou égale à un seuil de température $T_{seuil}$. Le seuil $T_{seuil}$ peut être fixé à une valeur supérieure de x% à la température valide $T_{m\_j}$ déterminée à l'étape E13, x étant par exemple supérieur ou égal à 10% et inférieur ou égal à 20%. Une zone chaude, de température supérieure ou égale au seuil $T_{seuil}$, correspond à une zone défectueuse (c'est-à-dire une défaut).

Dans le mode de réalisation décrit ici, lorsqu'une zone défectueuse est détectée au niveau d'un module $m_j$ lors de l'étape d'analyse E16, celle-ci est suivie d'une étape de marquage E17. Celle-ci est mise en oeuvre par le module de marquage 26 du dispositif de collecte 2. Le marquage vise à permettre à un opérateur de localiser ultérieurement le défaut (ou la zone défectueuse) dans la centrale PV 100. Il peut consister à marquer physiquement le module $m_j$ contenant le défaut détecté. Le marquage physique est de préférence non intrusif. Il peut être réalisé avec une peinture invisible projetée sur le module défectueux, avec un code barre inscrit sur un support à coller sur le module défectueux ou avec tout autre moyen de marquage adapté. En variante, le marquage peut consister à enregistrer des données relatives à la zone défectueuse, par exemple des données thermiques collectées, et à les marquer (c'est-à-dire à les associer en mémoire) avec des données de localisation et/ou d'identification du module PV $m_j$ défectueux. Les données de localisation peuvent être fournies par exemple par un dispositif GPS ou équivalent équipant le dispositif esclave 2A (2B, 2C). En variante encore, l'outil de traitement d'image pourrait être apte déterminer des données d'identification du module PV $m_j$ contenant le défaut détecté, ces données d'identification permettant à un opérateur de localiser le défaut. Par exemple, la centrale comportant N rangs de modules comportant chacun M modules PV numérotés de 1 à M, les données d'identification d'un module contenant un défaut peuvent comprendre le numéro de rang du module et le numéro d'ordre du module dans le rang.

Le dispositif esclave 2A (2B, 2C) peut à ce stade établir une communication avec le dispositif maître 1, pour lui transmettre des informations relatives au défaut détecté, par exemple les données thermiques collectées, le cas échéant accompagnées de données de localisation et/ou de données d'identification.

Après l'étape d'analyse E16, et le cas échéant l'étape de marquage E17, le procédé passe à une étape de test E18 afin de vérifier si le trajet du dispositif esclave 2A (2B, 2C) est terminé.

En cas de test négatif, le procédé revient à l'étape E11 afin de poursuivre le déplacement du dispositif de collecte 2A le long de son trajet.

En cas de test positif, c'est-à-dire si le dispositif esclave 2A (2B, 2C) a entièrement parcouru son trajet, il peut transmettre l'ensemble des données thermiques qu'il a collectées au dispositif maître 1, lors d'une étape E19.

Lors d'une étape E20, une fois que tous les dispositifs esclaves ont transmis leurs données thermiques au dispositif maître, celui-ci peut ensuite réaliser une analyse plus poussée des données collectées. Par exemple, par traitement d'images, le dispositif maître 1 peut assembler les différentes prises de vue thermique réalisées le long du trajet d'inspection du dispositif esclave de manière à reconstituer une cartographie de la centrale PV ou d'une partie de celle-ci. Il peut ensuite localiser les zones défectueuses détectées. Le cas échéant, le dispositif maître 1 peut également assembler les prises de vue visuelle.

Lors d'une étape E21, un opérateur planifie une intervention de maintenance ciblée à l'aide des données de marquage associées aux zones défectueuses détectées.

Dans la description qui précède, les prises de vue thermique sont réalisées du côté supérieur des modules PV, orienté vers le haut et destiné à recevoir les rayons solaires. Dans une variante de réalisation, des prises de vue thermique peuvent aussi être réalisées du côté inférieur des modules PV, orienté vers le sol. Cela permet de détecter des zones défectueuses relatives à des composants du module PV (câble, module électronique, etc.).

L'inspection peut concerner tous les modules solaires de la centrale photovoltaïque. En variante, on pourrait ne contrôler qu'une partie des modules solaires de la centrale photovoltaïque lors d'une opération d'inspection. Dans ce cas, l'inspection (ou contrôle) telle que précédemment décrite est mise en oeuvre pour chaque module d'un ensemble de modules solaires comportant une partie de la pluralité de modules solaires de la centrale.

## Revendications

1. Procédé d'inspection d'une centrale solaire photovoltaïque comportant une pluralité de modules solaires ($m_j$), comprenant une étape (E1) de détermination d'une fenêtre temporelle d'inspection ($F_{insp}$) durant laquelle une puissance prévisionnelle d'éclairement solaire destinée à être reçue par un module photovoltaïque est supérieure ou égale à un seuil prédéfini ($S_{rad}$), et durant la fenêtre temporelle d'inspection déterminée, pour chaque module d'un ensemble de modules solaires comportant au moins une partie de la pluralité de modules solaires de la centrale :

   • une étape (E13) de détermination d'une température valide de fonctionnement de module photovoltaïque ($T_{m\_j}$) ;
   • une étape (E14) de collecte de données thermiques ($DATA\_TH_i$) relatives au module photovoltaïque et
   • une étape (E16) d'analyse des données thermiques collectées ($DATA\_TH_i$) pour détecter une éventuelle zone défectueuse du module photovoltaïque, dont la température est telle que l'écart entre la température de ladite zone défectueuse et la température valide du module photovoltaïque est supérieure à un seuil prédéfini, la température de ladite zone étant plus élevée que la température valide.

2. Procédé selon la revendication précédente, **caractérisé en ce que** l'étape (E13) de détermination d'une température valide de fonctionnement du module photovoltaïque comprend une sous-étape (E130) de mesure d'une température ambiante, une sous-étape (E131) de détermination d'une puissance d'éclairement solaire reçue par le module et une sous-étape (E132) de calcul de la température valide de fonctionnement du module à partir de la température ambiante et de la puissance d'éclairement solaire déterminée.

3. Procédé selon la revendication précédente, **caractérisé en ce que** la puissance d'éclairement solaire reçue par le module photovoltaïque est déterminée à partir d'une mesure de la puissance d'éclairement solaire reçue par une cellule photovoltaïque de référence du module.

4. Procédé selon l'une des revendications précédentes, **caractérisé en ce qu'**on détermine une fenêtre temporelle d'inspection ($F_{insp}$) à partir d'un créneau horaire journalier prédéfini ($\Delta T$) et de données de prévisions météorologiques (DATA_meteo).

5. Procédé selon l'une des revendications précédentes, **caractérisé en ce que**, suite à la détection d'une zone défectueuse dans un module, il est prévu une étape (E17) de marquage physique dudit module.

6. Procédé selon l'une des revendications précédentes, **caractérisé en ce que**, suite à la détection d'une zone défectueuse dans un module, il est prévu une étape de marquage consistant à associer des données de localisation et/ou d'identification du module contenant la zone défectueuse à des données relatives à la zone défectueuse.

7. Procédé selon l'une des revendications précédentes, **caractérisé en ce que** les données thermiques ($DATA\_TH_i$) étant collectées par un dispositif de prise de vue thermique, il est prévu une étape (E15) de contrôle de la qualité des données thermiques collectées consistant à vérifier des conditions de prise de vue et la qualité de la prise de vue.

8. Procédé selon l'une des revendications précédentes, **caractérisé en ce qu'**il comprend une étape (E11) de déplacement le long d'un trajet d'inspection au sein de la centrale photovoltaïque par un dispositif (2A) de collecte de données thermiques et **en ce que** l'étape de détermination d'une température valide de fonctionnement de module est exécutée à une succession de points de contrôle le long du trajet, ladite température valide déterminée à un point de contrôle étant valable pour une pluralité de modules.

9. Procédé selon l'une des revendications précédentes, **caractérisé en ce qu'**il comprend une étape (E2) de détermination d'un nombre de dispositifs de collecte de données thermiques destinés à inspecter la centrale photovoltaïque et, pour chaque dispositif de collecte, d'un trajet d'inspection à parcourir, à partir d'un plan de la centrale photovoltaïque et de la fenêtre d'inspection déterminée ($F_{insp}$) et de manière à satisfaire au moins l'une des contraintes du groupe comportant la durée de la fenêtre d'inspection, la vitesse de déplacement d'un dispositif de collecte et la capacité de mesure d'un dispositif de collecte.

10. Système d'inspection d'une centrale solaire photovoltaïque comportant une pluralité de modules solaires, comprenant un dispositif de supervision (1) comportant un module (13) de détermination d'une fenêtre temporelle d'inspection ($F_{insp}$) durant laquelle une puissance prévisionnelle d'éclairement solaire destinée à être reçue par un module photovoltaïque est supérieure ou égale à un seuil prédéfini, et au moins un dispositif de collecte (2A, 2B, ...) destiné à parcourir un trajet (3A, 3B, ...) d'inspection de modules solaires durant la fenêtre temporelle d'inspection déterminée ($F_{insp}$), et comportant:

    • un module (20) de détermination d'une température valide de fonctionnement de module photovoltaïque ;
    • un module (21) de collecte de données thermiques, destiné à collecter des données thermiques relatives à un module photovoltaïque et
    • un module (24) d'analyse de données thermiques collectées pour détecter une éventuelle zone défectueuse du module photovoltaïque, dont la température est telle que l'écart entre la température de ladite zone défectueuse et la température valide du module photovoltaïque est supérieure à un seuil prédéfini, la température de ladite zone étant plus élevée que la température valide.

11. Système selon la revendication précédente, **caractérisé en ce que** le module de détermination d'une fenêtre temporelle d'inspection est agencé pour déterminer ladite fenêtre temporelle d'inspection à partir d'un créneau horaire journalier prédéfini et de données de prévisions météorologiques.

12. Système selon l'une des revendications 10 et 11, **caractérisé en ce que** le dispositif de collecte (2A) comprend un module de marquage physique (26) d'un module comportant une zone défectueuse.

13. Système selon l'une des revendications 10 à 12, **caractérisé en ce que** le dispositif de collecte (2A) comporte un module de marquage destiné à associer des données de localisation et/ou d'identification d'un module contenant une zone défectueuse à des données relatives à ladite zone défectueuse.

14. Système selon l'une des revendications 10 à 13, **caractérisé en ce que** le dispositif de collecte (2A) comprend un module (25) de contrôle de la qualité des données thermiques collectées adapté pour vérifier des conditions de prise de vue et la qualité des prises de vue.

15. Système selon l'une des revendications 10 à 14, **caractérisé en ce que** le dispositif de supervision (1) comporte un module (11) de détermination d'un nombre de dispositifs de collecte de données thermiques destinés à inspecter la centrale photovoltaïque et, pour chaque dispositif de collecte (2A, 2B, ...), d'un trajet d'inspection à parcourir, à partir d'un plan de la centrale photovoltaïque et de la fenêtre d'inspection déterminée ($F_{insp}$) et de manière à satisfaire au moins l'une des contraintes du groupe comportant la durée de la fenêtre d'inspection, la vitesse de déplacement d'un dispositif de collecte et la capacité de mesure d'un dispositif de collecte.

**Patentansprüche**

1. Verfahren zur Überprüfung einer Fotovoltaik-Solaranlage, umfassend eine Vielzahl von Solarmodulen ($m_j$), umfassend einen Schritt (E1) der Bestimmung eines Überprüfungszeitfensters ($F_{insp}$), während dessen eine voraussichtliche Solarbeleuchtungsleistung, die dazu bestimmt ist, von einem Fotovoltaik-Modul empfangen zu werden, größer oder gleich einer vordefinierten Schwelle ($S_{rad}$) ist, und während des bestimmten Überprüfungszeitfensters für jedes Modul einer Gesamtheit von Solarmodulen, umfassend mindestens einen Teil der Vielzahl von Solarmodulen der Anlage:

• einen Schritt (E13) der Bestimmung einer gültigen Funktionstemperatur eines Fotovoltaik-Moduls ($T_{m\_j}$);
• einen Schritt (E14) des Sammelns von thermischen Daten (DATA_TH$_i$) in Zusammenhang mit dem Fotovoltaik-Modul und
• einen Schritt (E16) der Analyse der gesammelten thermischen Daten (DATA_TH$_i$), um eine mögliche schadhafte Zone des Fotovoltaik-Moduls zu erfassen, deren Temperatur derart ist, dass der Abstand zwischen der Temperatur der schadhaften Zone und der gültigen Temperatur des Fotovoltaik-Moduls größer als eine vordefinierte Schwelle ist, wobei die Temperatur der Zone höher als die gültige Temperatur ist.

2.  Verfahren nach dem vorhergehenden Anspruch, **dadurch gekennzeichnet, dass** der Schritt (E13) der Bestimmung einer gültigen Funktionstemperatur des Fotovoltaik-Moduls einen Unterschritt (E130) des Messens einer Raumtemperatur, einen Unterschritt (E131) der Bestimmung einer Solarbeleuchtungsleistung, die von dem Modul empfangen wird, und einen Unterschritt (E132) der Berechnung der gültigen Funktionstemperatur des Moduls auf Basis der Raumtemperatur und der bestimmten Solarbeleuchtungsleistung umfasst.

3.  Verfahren nach dem vorhergehenden Anspruch, **dadurch gekennzeichnet, dass** die Solarbeleuchtungsleistung, die von dem Fotovoltaik-Modul empfangen wird, auf Basis einer Messung der Solarbeleuchtungsleistung, die von einer Referenz-Fotovoltaik-Zelle des Moduls empfangen wird, bestimmt wird.

4.  Verfahren nach einem der vorhergehenden Ansprüche, **dadurch gekennzeichnet, dass** ein Überprüfungszeitfenster ($F_{insp}$) auf Basis einer vordefinierten Tageszeitnische ($\Delta T$) und von meteorologischen Vorhersagedaten (DATA_meteo) bestimmt wird.

5.  Verfahren nach einem der vorhergehenden Ansprüche, **dadurch gekennzeichnet, dass** nach der Erfassung einer schadhaften Zone in einem Modul ein Schritt (E17) der physischen Kennzeichnung des Moduls vorgesehen ist.

6.  Verfahren nach einem der vorhergehenden Ansprüche, **dadurch gekennzeichnet, dass** nach der Erfassung einer schadhaften Zone in einem Modul ein Kennzeichnungsschritt vorgesehen ist, der darin besteht, Lokalisierungs- und/oder Identifizierungsdaten des Moduls, das die schadhafte Zone enthält, Daten in Zusammenhang mit der schadhaften Zone zuzuordnen.

7.  Verfahren nach einem der vorhergehenden Ansprüche, **dadurch gekennzeichnet, dass**, wobei die thermischen Daten (DATA_TH$_i$) von einer Wärmebildaufnahmevorrichtung gesammelt werden, ein Schritt (E15) der Kontrolle der Qualität der gesammelten thermischen Daten vorgesehen ist, darin bestehend, Aufnahmebedingungen und die Qualität der Aufnahme zu überprüfen.

8.  Verfahren nach einem der vorhergehenden Ansprüche, **dadurch gekennzeichnet, dass** es einen Schritt (E11) der Verschiebung entlang einer Überprüfungsstrecke innerhalb der Fotovoltaik-Anlage durch eine Vorrichtung (2A) zum Sammeln von thermischen Daten umfasst, und dass der Schritt der Bestimmung einer gültigen Modul-Funktionstemperatur an einer Folge von Kontrollpunkten entlang der Strecke ausgeführt wird, wobei die an einem Kontrollpunkt bestimmte gültige Temperatur für eine Vielzahl von Modulen gültig ist.

9.  Verfahren nach einem der vorhergehenden Ansprüche, **dadurch gekennzeichnet, dass** es einen Schritt (E2) der Bestimmung einer Anzahl von Vorrichtungen zum Sammeln von thermischen Daten, die dazu bestimmt sind, die Fotovoltaik-Anlage zu überprüfen, und für jede Sammelvorrichtung einer zu durchlaufenden Überprüfungsstrecke ausgehend von einer Ebene der Fotovoltaik-Anlage und dem bestimmten Überprüfungsfenster ($F_{insp}$) umfasst, um mindestens einer der Anforderungen der Gruppe, umfassend die Dauer des Überprüfungsfensters, die Verschiebegeschwindigkeit einer Sammelvorrichtung und die Messkapazität einer Sammelvorrichtung, zu entsprechen.

10. System zur Überprüfung einer Fotovoltaik-Solaranlage, umfassend eine Vielzahl von Solarmodulen, umfassend eine Überwachungsvorrichtung (1), umfassend ein Modul (13) zur Bestimmung eines Überprüfungszeitfensters ($F_{insp}$), während dessen eine voraussichtliche Solarbeleuchtungsleistung, die dazu bestimmt ist, von einem Fotovoltaik-Modul empfangen zu werden, größer oder gleich einer vordefinierten Schwelle ist, und mindestens eine Sammelvorrichtung (2A, 2B, ...), die dazu bestimmt ist, eine Überprüfungsstrecke (3A, 3B, ...) von Solarmodulen während des bestimmten Überprüfungszeitfensters ($F_{insp}$) zu durchlaufen, und umfassend:

• ein Modul (20) zur Bestimmung einer gültigen Funktionstemperatur eines Fotovoltaik-Moduls;

• ein Modul (21) zum Sammeln von thermischen Daten, das dazu bestimmt ist, thermische Daten in Zusammenhang mit dem Fotovoltaik-Modul zu sammeln, und

• ein Modul (24) zur Analyse der gesammelten thermischen Daten, um eine mögliche schadhafte Zone des Fotovoltaik-Moduls zu erfassen, deren Temperatur derart ist, dass der Abstand zwischen der Temperatur der schadhaften Zone und der gültigen Temperatur des Fotovoltaik-Moduls größer als eine vordefinierte Schwelle ist, wobei die Temperatur der Zone höher als die gültige Temperatur ist.

**11.** System nach dem vorhergehenden Anspruch, **dadurch gekennzeichnet, dass** das Modul zur Bestimmung eines Überprüfungszeitfensters dazu vorgesehen ist, das Überprüfungszeitfenster auf Basis einer vordefinierten Tageszeitnische und von meteorologischen Vorhersagedaten zu bestimmen.

**12.** System nach einem der Ansprüche 10 und 11, **dadurch gekennzeichnet, dass** die Sammelvorrichtung (2A) ein Modul zur physischen Kennzeichnung (26) eines eine schadhafte Zone umfassenden Moduls umfasst.

**13.** System nach einem der Ansprüche 10 bis 12, **dadurch gekennzeichnet, dass** die Sammelvorrichtung (2A) ein Kennzeichnungsmodul umfasst, das dazu bestimmt ist, Lokalisierungs- und/oder Identifizierungsdaten eines Moduls, das eine schadhafte Zone enthält, Daten in Zusammenhang mit der schadhaften Zone zuzuordnen.

**14.** System nach einem der Ansprüche 10 bis 13, **dadurch gekennzeichnet, dass** die Sammelvorrichtung (2A) ein Modul (25) zur Kontrolle der Qualität der gesammelten thermischen Daten umfasst, das dazu vorgesehen ist, Aufnahmebedingungen und die Qualität der Aufnahmen zu überprüfen.

**15.** System nach einem der Ansprüche 10 bis 14, **dadurch gekennzeichnet, dass** die Überwachungsvorrichtung (1) ein Modul (11) zur Bestimmung einer Anzahl von Vorrichtungen zum Sammeln von thermischen Daten, die dazu bestimmt sind, die Fotovoltaik-Anlage zu überprüfen, und für jede Sammelvorrichtung (2A, 2B, ...) einer zu durchlaufenden Überprüfungsstrecke ausgehend von einer Ebene der Fotovoltaik-Anlage und dem bestimmten Überprüfungsfenster ($F_{insp}$) umfasst, um mindestens einer der Anforderungen der Gruppe, umfassend die Dauer des Überprüfungsfensters, die Verschiebegeschwindigkeit einer Sammelvorrichtung und die Messkapazität einer Sammelvorrichtung, zu entsprechen.

## Claims

**1.** Method for inspecting a photovoltaic solar power plant having a plurality of solar modules ($m_j$), comprising a step (E1) of determining an inspection time window ($F_{insp}$) during which a forecast solar illumination power intended to be received by a photovoltaic module is greater than or equal to a predefined threshold ($S_{rad}$), and during the determined inspection time window, for each module of a set of solar modules including at least some of the plurality of solar modules of the power plant:

• a step (E13) of determining a photovoltaic module valid operating temperature ($T_{m\_j}$);
• a step (E14) of collecting thermal data ($DATA\_TH_i$) relating to the photovoltaic module, and
• a step (E16) of analysing the collected thermal data ($DATA\_TH_i$) in order to detect a possible faulty zone of the photovoltaic module, the temperature of which zone is such that the gap between the temperature of said faulty zone and the valid temperature of the photovoltaic module is greater than a predefined threshold, the temperature of said zone being higher than the valid temperature.

**2.** Method according to the preceding claim, **characterized in that** the step (E13) of determining a valid operating temperature of the photovoltaic module comprises a sub-step (E130) of measuring an ambient temperature, a sub-step (E131) of determining a solar illumination power received by the module and a sub-step (E132) of calculating the valid operating temperature of the module on the basis of the ambient temperature and of the determined solar illumination power.

**3.** Method according to the preceding claim, **characterized in that** the solar illumination power received by the photovoltaic module is determined on the basis of a measurement of the solar illumination power received by a reference photovoltaic cell of the module.

**4.** Method according to one of the preceding claims, **characterized in that** an inspection time window ($F_{insp}$) is determined on the basis of a predefined daily time slot ($\Delta T$) and of weather forecast data (DATA_meteo).

5. Method according to one of the preceding claims, **characterized in that**, following the detection of a faulty zone in a module, there is provided a step (E17) of physically marking said module.

6. Method according to one of the preceding claims, **characterized in that**, following the detection of a faulty zone in a module, there is provided a marking step consisting in associating data on the location and/or identity of the module containing the faulty zone with data relating to the faulty zone.

7. Method according to one of the preceding claims, **characterized in that**, with the thermal data ($DATA\_TH_i$) being collected by a thermal imaging device, there is provided a step (E15) of monitoring the quality of the collected thermal data, consisting in checking imaging conditions and the quality of the image.

8. Method according to one of the preceding claims, **characterized in that** it comprises a step (E11), performed by a thermal data collection device (2A), of travelling along an inspection path within the photovoltaic power plant, and **in that** the step of determining a module valid operating temperature is executed at a sequence of monitoring points along the path, said valid temperature determined at a monitoring point being applicable to a plurality of modules.

9. Method according to one of the preceding claims, **characterized in that** it comprises a step (E2) of determining a number of thermal data collection devices intended to inspect the photovoltaic power plant and, for each collection device, determining an inspection path to be covered on the basis of a layout of the photovoltaic power plant and of the determined inspection window ($F_{insp}$) and in such a way as to satisfy at least one of the constraints from the group containing the duration of the inspection window, the travel speed of a collection device and the measurement capability of a collection device.

10. System for inspecting a photovoltaic solar power plant having a plurality of solar modules, comprising a monitoring device (1) having a module (13) for determining an inspection time window ($F_{insp}$) during which a forecast solar illumination power intended to be received by a photovoltaic module is greater than or equal to a predefined threshold, and at least one collection device (2A, 2B, ...) intended to cover a solar module inspection path (3A, 3B, ...) during the determined inspection time window ($F_{insp}$), and having:

• a module (20) for determining a photovoltaic module valid operating temperature;
• a thermal data collection module (21), intended to collect thermal data relating to a photovoltaic module, and
• a module (24) for analysing collected thermal data in order to detect a possible faulty zone of the photovoltaic module, the temperature of which zone is such that the gap between the temperature of said faulty zone and the valid temperature of the photovoltaic module is greater than a predefined threshold, the temperature of said zone being higher than the valid temperature.

11. System according to the preceding claim, **characterized in that** the module for determining an inspection time window is designed to determine said inspection time window on the basis of a predefined daily time slot and of weather forecast data.

12. System according to either of Claims 10 and 11, **characterized in that** the collection device (2A) comprises a module (26) for physically marking a module having a faulty zone.

13. System according to one of Claims 10 to 12, **characterized in that** the collection device (2A) has a marking module intended to associate data on the location and/or identity of a module containing a faulty zone with data relating to said faulty zone.

14. System according to one of Claims 10 to 13, **characterized in that** the collection device (2A) comprises a module (25) for monitoring the quality of the collected thermal data and designed to check imaging conditions and the quality of the images.

15. System according to one of Claims 10 to 14, **characterized in that** the monitoring device (1) has a module (11) for determining a number of thermal data collection devices intended to inspect the photovoltaic power plant and, for each collection device (2A, 2B, ...), determining an inspection path to be covered on the basis of a layout of the photovoltaic power plant and of the determined inspection window ($F_{insp}$) and in such a way as to satisfy at least one of the constraints from the group containing the duration of the inspection window, the travel speed of a collection device and the measurement capability of a collection device.

100

PCi

2A

**Figure 1**

100

3C

2C

3B

2B

3A

2A

1

**Figure 2**

**22**   **23**

Condition ensoleillement

Température ambiance

m_j

21

2A

Capteur de température du module

**Figure 3**

**Figure 4A**

E15

INSP

ANL $DATA\_TH_i$ — E16

MRQ — E17

E11 ← N — TJ END ? — E18

Y

Tr $DATA\_TH_i$ — E19

ANL $DATA\_TH_i$ — E20

INSPECTION — E21

**Figure 4B**

**Figure 5**

**Figure 6**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120268149 A
- US 20110036344 A